# EUROPÄISCHE PATENTANMELDUNG

(11) **EP 2 745 929 A1**
(43) Veröffentlichungstag der Anmeldung: **25.06.2014**
(21) Anmeldenummer: 12197739.1
(22) Anmeldetag: 18.12.2012
(51) Int. Cl.: B01J 19/00, B01J 8/00

(54) **Verfahren zur Durchführung wärmeverbrauchender Prozessen**

(71) Anmelder: BASF SE, 67056 Ludwigshafen (DE); Linde AG, 80331 München (DE)
(72) Erfinder: Machhammer, Otto, 68163 Mannheim (DE); Hormuth, Wolfgang Alois, 67487 St.Martin (DE); Schneider, Christian, 68161 Mannheim (DE); Bode, Andreas, 68163 Mannheim (DE); Goeke, Volker, 82538 Geretsried (DE); Maass, Hans-Jürgen, 01328 Dresden (DE); Kern, Matthias, 76135 Karlsruhe (DE); Klingler, Dirk, 68163 Mannheim (DE); König, Rene, 67067 Ludwigshafen (DE); Brüggemann, Philipp, 91054 Erlangen (DE); Bernnat, Jens, 67269 Grünstadt (DE); Kolios, Grigorios, 67435 Neustadt (DE)

(57) **Zusammenfassung**

Die Erfindung betrifft ein Verfahren zur Durchführung eines wärmeverbrauchenden Prozesses, dadurch gekennzeichnet, dass die für den wärmeverbrauchenden Prozess benötigte Gesamtenergie im Jahresmittel aus mindestens zwei verschiedenen Energiequellen stammt, wobei eine der Energiequellen eine elektrische Energiequelle ist, deren Leistung zwischen 0 und 100% der benötigten Gesamtleistung variiert und thermische Energie aus wenigstens einer weiteren Energiequelle (B) dem wärmeverbrauchenden Prozess derart zugeführt wird, dass die insgesamt zugeführte thermische Leistung stets einem Sollwert entspricht oder diesem angenähert ist.

## Beschreibung

Die Erfindung betrifft ein Verfahren zur Durchführung eines wärmeverbrauchenden Prozesses, dem thermische Energie aus einer durch elektrischen Strom gespeisten Energiequelle mit zeitlich schwankender Leistung zugeführt wird.

Der Anteil erneuerbarer Energien an der Stromerzeugung, der im Jahr 2011 in Deutschland bereits bei 20% lag, wird sich in den nächsten Jahren noch deutlich erhöhen, da aufgrund steigender Kosten für fossile Energieträger einerseits und wegen marktregulatorischer Maßnahmen andererseits die Technologien zur Stromerzeugung auf Basis erneuerbarer Energien betriebswirtschaftlich attraktiv sind und es bleiben werden. Hierzu wird auch die mit der technischen Weiterentwicklung einhergehende Reduktion der spezifischen Investitionskosten beitragen. Ein Problem dabei ist, dass Sonne, Wind und Wasser zeitlich nicht konstant verfügbar sind und ihre Verfügbarkeit darüber hinaus nur schlecht vorhersagbar ist. Somit kommt es immer häufiger zu Stromspitzen, die nur unvollständig von den Stromverbrauchern abgenommen werden können und daher als sog. Überschussstrom auf dem Strommarkt deutlich unterhalb seiner Gestehungskosten oder zu Preisen, die bezogen auf seinen Energiegehalt niedriger sind als für einen fossilen Brennstoff mit demselben Brennwert, oder umsonst (d. h. ohne Gegenleistung) oder sogar zu negativen Preisen angeboten werden. Um zu verhindern, dass es zu Spannungs- und Frequenzschwankungen oder sogar zu einem Ausfall des Stromnetzes kommt, ist es notwendig, dass die in das Netz eingespeiste Strommenge immer dem aktuellen Verbrauch entspricht, da ansonsten an das Netz angeschlossene elektrischen Verbrauchern geschädigt werden können. Gegenwärtig werden kurzzeitige Stromschwankungen mit Hilfe sog. Spitzenlastkraftwerken im Rahmen einer Systemdienstleistung für die Netzbetreiber kompensiert.

Geeignete Spitzenlastkraftwerke sind beispielsweise Pump- oder Druckluftspeicherkraftwerke. Diese sind schnell regelbar und können innerhalb von Minuten zwischen Stromerzeugung und Stromverbrauch wechseln, um die im Überschuss vorhandene elektrische Energie in eine andere Energieform umzuwandeln. Im Fall eines Pumpspeicherkraftwerks wird dazu Wasser von einem tieferen Niveau in ein höheres gepumpt, im Fall des Druckluftspeichers wird mit Hilfe von Verdichtern der Druck eines Luftspeichers erhöht. Diese Energie steht abzüglich der Umwandlungsverluste in Zeiten wieder zur Stromproduktion zur Verfügung, in denen der Strombedarf die aktuelle Stromproduktion aus Grund- und Mittellast übersteigt. Druckluftspeicher haben den Vorteil, dass sie über längere Zeit Strom aufnehmen können und innerhalb kürzester Zeit das Vielfache ihrer Aufnahmeleistung wieder ans Netz abgeben können. Beispielsweise kann eine Stromaufnahme während der Nachtstunden des Wochenendes erfolgen und die Abgabe dieser Energie binnen 1-2 Stunden mit dem Vielfachen der Aufnahmeleistung zur werktäglichen Abendspitze. Kraftwerke dieser Art stehen jedoch nur in begrenzter Anzahl und mit begrenzter Kapazität zur Verfügung, da die hierfür notwendigen geografischen bzw. geologischen Voraussetzungen und behördliche Genehmigungen nur an wenigen Orten gegeben sind. Ferner weisen die Druckluftspeicherkraftwerke mit ca. 40 bis 50% einen relativ geringen Wirkungsgrad auf.

In Deutschland wird durch das Erneuerbare-Energien-Gesetz den Produzenten erneuerbarer Energien die vorrangige Einspeisung in das Stromnetz garantiert. So kann z. B. ein kurzeitig hohes Windaufkommen zu einem Überangebot an Strom führen, wenn alle schnell verfügbaren Strom-Speichermöglichkeiten bereits voll ausgelastet sind und die Lastminderung von Mittellastkraftwerken zu träge erfolgt. In diesem Fall wird der überschüssige Strom zu sehr niedrigen, zum Teil sogar negativen Preisen auf dem Strommarkt angeboten. Dies bedeutet, dass der Verkäufer den Käufer u.U. für die Abnahme des Stroms bezahlt. Der Jahrestiefpreis auf dem Intraday-Markt der europäischen Energiebörse EEX lag dabei im Jahr 2012 bei etwa - 200€/MWh. Im Gegensatz dazu können z.B. bei Ausfall eines großen Kraftwerks auch sehr hohe Preise auftreten. So lag 2012 der Höchstpreis auf dem EEX-Spotmarkt bei ca. 550€/MWh.

Kommt es trotz aller Netzoptimierungs- und Netzausbaumaßnahmen zu Situationen, in denen ein Herunterregeln der erneuerbaren Elektrizitätserzeuger aufgrund von Überkapazitäten bzw. fehlender Transportkapazitäten nicht vermeidbar ist, so muss dies vom Netzbetreiber, in dessen Netz die Ursache für das Herunterregeln begründet ist, vergütet werden. Im Jahr 2010 waren 127 GWh von diesen sog. Einspeisemanagementmaßnahmen betroffen, die mit etwa 10 Mio. € vergütet werden mussten (Monitoringbericht 2011 der Bundesnetzagentur).

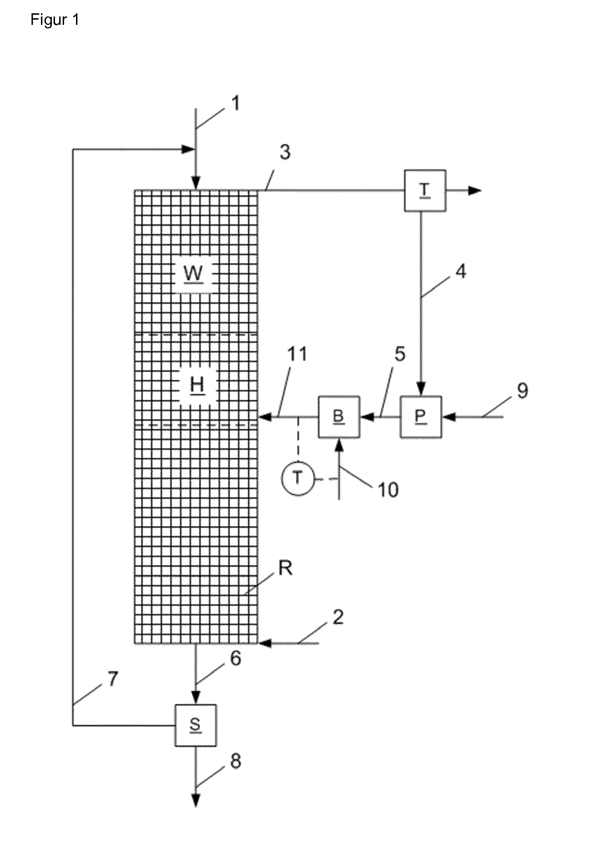

Bei der Frequenzregelung in elektrischen Netzen werden unterschiedlich schnelle Regelkreise eingesetzt: Die Primärregelung mit einer Ansprechzeit von weniger als 30s, die Sekundärregelung mit einer Ansprechzeit von weniger als 7,5min und schließlich die Tertiärregelung, die eine längere Ansprechzeit zulässt. Die Primär- und Sekundärregelung werden automatisch ausgelöst und wirken direkt auf den Betriebszustand laufender Kraftwerke. Die Tertiärregelung (oder Minutenreserve) wird in der Regel durch organisatorische Maßnahmen aktiviert. Die Minutenreserve kann positiv (bei erhöhtem Leistungsbedarf) oder negativ (bei reduziertem Leistungsbedarf) sein. Die positive Minutenreserve wird üblicherweise durch Zuschalten von Reservekraftwerken aktiviert. Die negative Minutenreserve erfordert einen Energieverbraucher. Nach dem aktuellen Stand der Technik werden dafür neben Pumpspeicherkraftwerken auch Kapazitätsänderungen von Großkraftwerken und Kraft-Wärme-Kopplungs-Anlagen sowie Endverbraucher, wie z.B. Lichtbogenöfen oder Kühlhäuser, genutzt. Jedoch ist deren Kapazität regional ungleichmäßig verteilt (s. IDOS-Bericht). Außerdem ist absehbar, dass der Bedarf an negativer Minutenreserve durch den Ausbau der regenerativen Energiequellen zunehmen wird. Im Jahr 2010 betrug die von den vier deutschen Netzbetreibern abgerufene negative Minutenreserve insgesamt ca. 850GWh (s. IDOS-Bericht, Abbildung 1). Dies entspricht etwa dem durchschnittlichen Jahresstromverbrauch einer Stadt mit 200.000 Einwohnern.

Durch die ausreichende Verfügbarkeit von schnell be- und entladbaren Energiespeichern könnte die oben beschriebene Problematik behoben werden. Allerdings konnte sich von den derzeit untersuchten Speichertechnologien, wie z.B. Batterien, Schwungräder, Kondensatoren, Hochtemperaturspeicher, bisher keine am Markt etablieren, da zum einen die spezifischen Investitionskosten zu hoch und zum anderen technische Probleme wie z.B. die Selbstentladung oder eine zu geringe Kapazität nicht gelöst sind.

Eine weitere derzeit viel diskutierte Technologie zur Nutzung und/oder Speicherung von Überschussstrom basiert auf der Elektrolyse von Wasser zur Produktion von Wasserstoff, der anschließend gespeichert und zeitversetzt rückverstromt oder chemisch weiterverarbeitet werden kann. Beispielsweise wird momentan intensiv daran geforscht, den durch Elektrolyse gewonnenen Wasserstoff mit Kohlendioxid zu synthetischem Erdgas umzusetzen. Die bereits beschriebenen Schwankungen in der Verfügbarkeit des Überschussstroms bedingen jedoch eine transiente Betriebsweise der Elektrolyse und damit einen entsprechend stark schwankenden Produktstrom.

Elektrischer Strom wird derzeit als Energiequelle der Wahl hauptsächlich für nicht katalysierte Gas/Feststoff- und für Feststoffreaktionen eingesetzt, wenn große Wärmeströme auf sehr hohem Temperaturniveau eingetragen werden müssen. Typische Anwendungen sind metallurgische Öfen [Ullmann: Metalurgical Furnaces]. Als einziger relevanter Gasphasenprozess hat sich das Plasmaverfahren zur Herstellung von Acetylen aus Methan großtechnisch etabliert [Baumann, Angewandte Chemie, Ausgabe B, Band 20 (1948), Seiten 257-259,1948]. In der Literatur finden sich zwar weitere Hinweise auf den Einsatz von elektrischen Energiequellen in Gasphasenprozessen, aus denen jedoch bislang keine wirtschaftlich in industriellem Maßstab einsetzbaren Anwendungen entwickelt werden konnten.

Verfahren mit elektrischer Beheizung werden für die Herstellung von Blausäure (HCN) aus Alkanen, insbesondere aus Methan und Ammoniak, beschrieben. In der Patentschrift US2958584 wird die Herstellung von HCN aus Propan und Ammoniak in einer elektrisch beheizten Wirbelschicht aus Kohlenstoffpartikeln offenbart, während US6096173 die Herstellung von Blausäure als Gasphasenreaktion von Methan und Ammoniak unter Verwendung einer Korona-Entladung beschreibt.

Die Patentanmeldung DE1266273 offenbart die Zerlegung eines Kohlenwasserstoffs in Wasserstoff und Koks, wobei der Koks eine hohe Reinheit und Festigkeit aufweist. Die Beheizung der Reaktionszone wird elektrisch resistiv durchgeführt, indem das Kohlenstoffbett, das als Wanderbett oder Wirbelbett beschrieben ist, als Widerstand genutzt wird. Ferner wird eine Wärmeintegration durch Gegenstromführung von Feststoff- und Gasstrom beschrieben.

Ferner wurden der Einsatz eines Plasmagenerators für die Herstellung von Synthesegas untersucht (37 L. Kerker, R. Müller: "Das Plasmareforming-Verfahren zur Erzeugung von Reduktionsgasen," Stahl Eisen 104, (1984) no. 22, 1137) sowie die Nutzung elektrischer bzw. elektromagnetischer Verfahren zur Zersetzung von Kohlenwasserstoffen beschrieben (Häussinger, P., Lohmüller, R. and Watson, A. M. 2000. Hydrogen, 2. Production. Ullmann's Encyclopedia of Industrial Chemistry). So kann Wärme durch elektrischen Strom induktiv (DE2420579) oder resistiv erzeugt und auf die Kohlenwasserstoffe übertragen werden (DE1266273). Besonders wirkungsvoll sind Plasma-Verfahren wie beispielsweise das in der Patentanmeldung WO93/12030 offenbarte, bei denen ein Gas in einem Lichtbogen durch Ionisierung seiner Atome bzw. Moleküle in ein Plasma überführt wird. Die bei der Rekombination von Elektronen und Ionen erzeugte Wärme liefert die für die Zersetzung der Kohlenwasserstoffe notwendige Energie.

Bei einigen wichtigen wärmeverbrauchenden Prozessen handelt es sich um Hochtemperaturprozesse, d.h. Prozesse, die bei Temperaturen zwischen 500 und 2.500°C ausgeführt werden. Als Vertreter dieser sehr energie-intensiven Verfahren seien die Dampf- und die TrockenReformierung, Dehydrierungen, beispielsweise von primären Alkoholen zu Aldehyden, von sekundären Alkoholen zu Ketonen, von Alkanen und Alkenen und von Cycloalkanen zu Cycloalkenen, die Thermolyse von Wasser, die Herstellung von Blausäure aus Methan und Ammoniak, die Herstellung von Stickstoffmonoxid und das Cracken bzw. die Pyrolyse von Kohlenwasserstoffen genannt. Die Dampf- und die Trockenreformierung sind Verfahren zur Herstellung von Synthesegas, einer Mischung von Kohlenstoffmonoxid und Wasserstoff, aus kohlenstoffhaltigen Energieträgern wie beispielsweise Erdgas, Leichtbenzin, Methanol, Biogas oder Biomasse sowie Wasser bzw. Kohlendioxid.

In industriellem Maßstab laufen diese Prozesse kontinuierlich ab und benötigen deshalb eine konstante Wärmeversorgung. Derzeit werden die genannten Hochtemperaturprozesse ausschließlich unter Verwendung von Energiequellen durchgeführt, die über oxidative Verfahren (autotherm und/oder allotherm) gespeist werden. Obwohl bei Hochtemperaturprozessen die Aufwendungen für das Erreichen der hohen Temperaturen einen entscheidenden Faktor für deren Wirtschaftlichkeit bilden, findet sich im Stand der Technik kein Hinweis auf eine Verwendung des kostengünstigen Überschussstroms, insbesondere einer Kombination aus einer elektrischen und einer nicht-elektrischen Energiequelle. Ferner findet sich kein Hinweis, dass bei einem Hochtemperaturprozess während des Verfahrens zwischen mehreren verschiedenen Energiequellen gewechselt werden kann.

Aufgabe der vorliegenden Erfindung ist es daher, ein Verfahren der gattungsgemäßen Art aufzuzeigen, mit dem es möglich ist, mit zeitlich schwankender Leistung zur Verfügung stehenden elektrischen Strom effektiv als Energiequelle zu nutzen. Eine weitere Aufgabe der vorliegenden Erfindung ist es, chemische Prozesse als Energieabnehmer bei einer negativen Minutenreserve zur Frequenzregelung in elektrischen Netzen bereitzustellen.

Diese gestellten Aufgaben werden erfindungsgemäß dadurch gelöst, dass die für den wärmeverbrauchenden Prozess benötigte Gesamtenergie im Jahresmittel aus mindestens zwei verschiedenen Energiequellen stammt, wobei eine der Energiequellen eine elektrische Energiequelle ist, deren Leistung zwischen 0 und 100% der benötigten Gesamtleistung variiert und thermische Energie aus wenigstens einer weiteren Energiequelle dem wärmeverbrauchenden Prozess derart zugeführt wird, dass die insgesamt zugeführte Leistung stets einem Sollwert entspricht oder diesem angenähert ist.

Die für den wärmeverbrauchenden Prozess insgesamt zur Verfügung stehende Leistung kann dabei von dem Sollwert um weniger als 10%, bevorzugt weniger als 5% und besonders bevorzugt weniger als 3% abweichen.

Sowohl der Sollwert als auch die zulässige Abweichung können zeitlich verändert - falls beispielsweise der wärmeverbrauchende Prozess nur in Teillast oder zeitweise auch in Überlast durchgeführt werden soll - oder konstant gehalten werden. Vorzugsweise wird die Nennleistung, mit der die für die Durchführung des wärmeverbrauchenden Prozesses eingesetzte Vorrichtung betreibbar ist, als Sollwert gewählt und während des Normalbetriebs der Vorrichtung konstant gehalten.

Vorzugsweise wird die wenigstens eine weitere Energiequelle durch oxidative Prozesse wie beispielsweise die Verbrennung von Erdgas gespeist. Denkbar ist jedoch auch der Einsatz von Erdwärme oder Sonnenenergie zur Speisung der Energiequelle. Ferner können Hochtemperaturprozesse als weitere Energiequelle dienen, deren Abwärme dem wärmeverbrauchenden Prozess zugeführt wird.

Die Erfindung erlaubt es daher, den wärmeverbrauchenden Prozess unabhängig von der momentan zur Verfügung stehenden elektrischen Leistung stets unter optimalen Betriebsbedingungen durchzuführen. Insbesondere ist es möglich, Überschussstrom ohne Zwischenspeicherung für den wärmeverbrauchenden Prozess einzusetzen und so seine Kostenvorteile ohne wesentliche Einschränkungen zu nutzen.

Erfindungsgemäß handelt es sich bei dem wärmeverbrauchenden Prozess vorteilhaft um einen endothermen Hochtemperaturprozess. Bevorzugt um einen Prozess, dessen Energieverbrauch in der Reaktionszone größer als 0,5 MW/m³ ist, besonders bevorzugt größer 1 MW/m³, insbesondere größer als 2 MW/m³. Beispielsweise kann der Energieverbrauch zwischen 0,5 und 10 MW/m³ in der Reaktionszone liegen.

Unter dem Begriff Reaktionszone wird bei der vorliegenden Erfindung derjenige Bereich im Reaktor verstanden, der eine Temperatur von größer 500°C aufweist.

Die Maximaltemperatur in der Reaktionszone liegt vorteilhaft bei größer 500°C, bevorzugt bei größer 800°C, besonders bevorzugt größer 1100°C. Beispielsweise liegt die Temperatur in der Reaktionszone in einem Bereich von 500 bis 2500°C.

Beispiele für den Energiebedarf endothermer Hochtemperaturprozesse finden sich in Tabelle 1.

| Produkt | Temperaturniveau Wärmeeintrag [°C] | Kapazität GER [Mio tn / a] | Wärmebedarf [GWh/a] | CO₂-Äquivalent [Mio tn/a] |
|---|---|---|---|---|
| Wasserstoff | 900 | 0,535 | 5572,9 | 2,25 |
| Propen | 1050 | 3,9 | 3224,2 | 1,30 |
| Styrol | 720 | 1,3 | 420,1 | 0,17 |

Der Exergieverlust bei der Durchführung des erfindungsgemäßen Verfahrens liegt vorzugsweise bei weniger als 60%, bevorzugt bei weniger als 50%, besonders bevorzugt bei weniger als 40%, insbesondere bei weniger als 25 % der eingetragenen elektrischen Energie. Exergie ist der Anteil der inneren Energie eines Systems, der in mechanische Energie ohne Entropiezunahme umsetzbar ist. Elektrische Energie ist praktisch vollständig eine Exergie.
Mit besonderem Vorzug wird das erfindungsgemäße Verfahren bei der Herstellung von Synthesegas, von Wasserstoff, von Styrol, Propen, Buten und/oder Benzol, von Acetylen, von Kohlenstoffmonoxid, von Blausäure, von Stickstoffmonoxid sowie bei der Kalzinierung von Aluminiumhydroxid eingesetzt. Bevorzugt sind folgende Verfahren: Dampf- und Trockenreformierung, die Thermolyse von Wasser, die Dehydrierung Ethylbenzol zu Styrol, von Propan zu Propen, von Butan zu Buten und/oder von Cyclohexan zu Benzol, die Pyrolyse und das Cracken von Kohlenwasserstoffen in Festbett oder Wirbelschichtverfahren, insbesondere die Pyrolyse von Methan, Ethan, Propan und/oder Butan, sowie die pyrolytische Acetylenherstellung, die Herstellung von Benzol aus Methan, die Reduktion von Kohlendioxid zu Kohlenmonoxid und die Herstellung von Blausäure aus Methan und Ammoniak sowie die Herstellung von Stickstoffmonoxid aus Stickstoff und Sauerstoff.
Vorteilhaft ist der erfindungsgemäße Hochtemperaturprozess energieintegriert in einen Verbundstandort eingebunden.

Das erfindungsgemäße Verfahren wird vorzugsweise zur Behandlung von gasförmigen Prozessströmen eingesetzt, die mindestens ein Produkt und/oder Edukt und/oder einen Wärmeträger enthalten. Vorteilhaft ist der Wärmeträger vollständig von den Produkten und Edukten abtrennbar. Vorteilhaft handelt es sich bei dem Wärmeträger um keinen zusätzlichen Stoff im Vergleich zu den aus dem Stand der Technik bekannten Prozessströmen des jeweiligen wärmeverbrauchenden Prozesses. Bevorzugt sind solche Prozessströme, die Kohlenwasserstoffe, insbesondere Methan, Ethan, Propan, Butan, Cyclohexan und/oder Ethylbenzol, Wasser, Wasserstoff, Kohlendioxid, Kohlenmonooxid, Ammoniak und/oder Sauerstoff und/oder Inertgase, wie beispielsweise Stickstoff, enthalten. Besonders bevorzugt sind solche Prozessströme, die Methan, Ethylen und/oder Wasserstoff enthalten. Insbesondere ist Wasserstoff als Prozessstrom bevorzugt.

Das erfindungsgemäße Verfahren wird vorteilhaft kontinuierlich oder quasi-kontinuierlich durchgeführt.

Vorzugsweise werden im Jahresmittel mindestens 50%, besonders bevorzugt mindestens 75%, noch bevorzugter mindestens 90% und insbesondere mindestens 95% der eingesetzten elektrischen Energie durch Überschussstrom bereitgestellt. Besonders bevorzugt wird jedoch die gesamte über Elektrizität in das Verfahren eingebrachte Energie durch Überschussstrom erzeugt.

Die dem wärmeverbrauchenden Prozess über elektrischen Strom zugeführte thermische Leistung kann zwischen 0 und 100% der erforderlichen thermischen Gesamtleistung liegen. Bevorzugt werden im Jahresmittel mindestens 10% der für den wärmeverbrauchenden Prozess benötigten Gesamtenergie aus der elektrischen Energiequelle mit schwankender Leistung bezogen, besonders bevorzugt mindestens 15% und ganz besonders bevorzugt mindestens 20%.

Vorteilhaft erfolgt ein Wechsel der Energiequellen während der Durchführung des wärmeverbrauchenden Prozesses. Unter einem Wechsel der Energiequellen ist ein Zu- bzw. Abschalten einer der Energiequellen oder ein Erhöhen oder Erniedrigen der Leistung einer oder mehrerer Energiequellen, d.h. eine Änderung des Energiequellenmixes, zu verstehen.

Der Wechsel der Energiequellen beeinträchtigt die Durchführung des wärmeverbrauchenden Prozesses vorteilhaft nur wenig. Bevorzugt verringert sich bzw. schwankt der dem Prozess zugeführte Wärmestrom während der Übergangszeit maximal um 10%, insbesondere um 5% und besonders bevorzugt um 1 %. Die Übergangszeit ist erfindungsgemäß diejenige Zeit, in der der Wechsel der Energiequellen und/oder das Erhöhen oder Erniedrigen der Leistung einer Energiequelle, d.h. eine Änderung des Energiequellenmixes, vollständig vollzogen wird. Die Übergangszeit lässt sich beispielsweise anhand der Summe der Leistung aller Energiequellen messen oder anhand der Temperatur in der Reaktionszone; außerhalb der Übergangszeit (und ggf. außerhalb des An- oder Herunterfahrens des Prozesses) ist die Temperatur in der Reaktionszone bevorzugt konstant, z. B. bei einer stationären Fahrweise des wärmeverbrauchenden Prozesses, oder weist z. B. bei einer periodischen Fahrweise des wärmeverbrauchenden Prozesses einen periodischen Temperaturverlauf auf.

Die Übergangszeit ist vorteilhaft kürzer als die geforderte Ansprechzeit der Minutenreserve in elektrischen Netzwerken, bevorzugt kürzer als die geforderte Ansprechzeit der Sekundärregelung und besonders bevorzugt kürzer als die geforderte Ansprechzeit der Primärregelung.

Die Übergangszeit ist vorteilhaft kürzer als 15 Minuten, bevorzugt kürzer als 7,5 Minuten, besonders bevorzugt kürzer als fünf Minuten, ferner besonders bevorzugt kürzer als eine Minute, insbesondere kürzer als 30 Sekunden.

Die Dynamik der Umschaltung zwischen den Energiequellen orientiert sich an der Zeitkonstante der Minutenreserve bei Frequenzregelungen in elektrischen Netzen. Mit Hilfe einer Folgeregelung kann die Umschaltung zwischen einer elektrischen und einer nicht-elektrischen Energiequelle ohne Schwankung der Gesamtleistung für den Hochtemperaturprozess durchgeführt werden. Alternativ kann die Umschaltung zwischen einer elektrischen und einer nicht-elektrischen Energiequelle auf eine konstante Temperatur in der Reaktionszone des wärmeverbrauchenden Prozesses geregelt werden.

Vorteilhaft ändert sich durch den Wechsel der Energiequellen die Nebenproduktselektivität der Hochtemperaturprozesse nur wenig, bevorzugt erhöht sich die Nebenproduktselektivität um maximal 1 %, bevorzugt um maximal 0,5 % (absolut).

Um thermische Energie für den wärmeverbrauchenden Prozess über elektrischen Strom bereitzustellen, können unterschiedliche Wege beschritten werden. Beispielhaft sind hier induktive oder resistive Verfahren, Plasmaverfahren, ein Erwärmen durch elektrisch leitfähige Heizelemente/Kontaktflächen oder durch Mikrowellen zu nennen.

Die thermische Energiezufuhr in die Prozessströme kann beispielsweise außerhalb des Reaktors, in Abschnitten in welchen wärmeverbrauchende Prozessschritte durchgeführt werden, beispielsweise Feed-Vorwärmung, und/oder innerhalb der Reaktors, sowohl außer- als auch innerhalb der Reaktionszone erfolgen.

Beispielsweise kann mit Hilfe des Stroms Wärme in einem oder mehreren elektrisch leitfähigen Heizelementen erzeugt werden, mit denen ein zu behandelnder Prozessstrom, d.h. ein Wärmeträger (wobei der Wärmeträger auch ein Teil des Produktstroms sein kann) oder Eduktstrom, in direkten Kontakt gebracht und dabei aufgeheizt wird. Falls ein Wärmeträger oder Eduktstrom in direktem Kontakt mit einem strombeheizten Heizelement aufgeheizt wird, kann dieser anschlie-βend Wärme in direktem Kontakt und/oder über einen Wärmetauscher auf einen anderen Prozessstrom übertragen.

Zur Wärmeerzeugung kann der elektrische Strom durch ein als Heizleiter ausgeführtes Heizelement geführt werden, wobei Wärme resistiv erzeugt wird. Handelt es sich bei dem elektrischen Strom um Wechselstrom, kann mit seiner Hilfe ein magnetisches Wechselfeld erzeugt werden, wozu der Strom durch eine Induktionsspule geführt wird. Ein elektrisch leitfähiges Heizelement, das von der Induktionsspule elektrisch isoliert ist, wird so angeordnet, dass in ihm durch das magnetische Wechselfeld Wirbelströme induziert werden, die aufgrund der ohmschen Verluste zur Erwärmung des Heizelements führen.

Eine alternative Ausgestaltung der Erfindung sieht vor, dass der elektrische Strom verwendet wird, um zumindest einen Teil der gasförmigen Prozessströme durch teilweise Ionisierung in ein Plasma zu überführen. Die bei der Rekombination von Elektronen und Ionen freigesetzte Energie wird zu einem Großteil auf die Gas-Atome bzw. -Moleküle übertragen, so dass ein aufgeheizter Prozessstrom erzeugt wird, der entweder selbst bereits ein aufgeheizter Eduktstrom ist und/oder als Wärmeträger fungiert, dessen Wärme anschließend in direktem Kontakt und/oder über einen Wärmetauscher auf einen Eduktstrom des wärmeverbrauchenden Prozesses, z. B. auf zu zersetzende Kohlenwasserstoffe, übertragen wird. Zweckmäßigerweise wird zumindest einen Teil der gasförmigen Prozessströme hierbei durch einen Plasmagenerator geführt, in den ein kalter Gasstrom eingeleitet und aus dem ein aufgeheizter Gasstrom abgezogen wird. Die Größe der Teilmenge, die durch den Plasmagenerator geführt wird, bestimmt sich durch die Menge der zu übertragenden Wärme.

Bei der Durchführung des erfindungsgemäßen Verfahrens wird die mit zeitlich schwankender Leistung aus der elektrischen Energiequelle bezogene thermische Energie beispielsweise dazu verwendet, um einen aufgeheizten Prozessstrom, ggf. einen Wärmeträger, mit konstantem Mengenstrom zu erzeugen, dessen Temperatur in Abhängigkeit von der für die Aufheizung momentan zur Verfügung stehenden elektrischen Leitung zeitlich schwankt. Alternativ kann auch der Mengenstrom des Prozessstroms, ggf. des Wärmeträgers, so geregelt werden, dass die Temperatur des Prozessstroms, ggf. des Wärmeträgers, - zumindest in einem weiten Bereich - unabhängig ist von der elektrischen Leistung, die zu seiner Aufheizung bereitsteht.

Vorzugsweise wird bei der Durchführung des erfindungsgemäßen Verfahrens einem Prozessstrom in einem ersten Aufheizschritt thermische Energie aus der elektrischen Energiequelle zugeführt. Falls die momentane Leistung der elektrischen Energiequelle nicht ausreicht, wird weiter stromabwärts in wenigstens einem zweiten Aufheizschritt die Temperatur des Prozessstroms durch die Zuführung von thermischer Energie aus wenigstens einer nicht-elektrischen Energiequelle auf den gewünschten Wert angehoben. Die Aufheizung des Prozessstroms kann auch in umgekehrter Reihenfolge stattfinden, d. h. der Prozessstrom wird erst durch thermische Energie aus wenigstens einer nicht-elektrischen Energiequelle vorgeheizt und anschließend durch elektrisch erzeugte Wärme auf die gewünschte Temperatur gebracht.

Alternativ zur Schaltung in Reihe der beiden oder mehreren Energiequellen können diese Energiequellen auch parallel geschaltet sein, wobei zwei oder mehr Prozessströmen parallel thermische Energie zugeführt wird. Besonders bevorzugt ist eine Parallelschaltung, wenn jede Energiequelle das Potential besitzt, einen Prozessstrom auf eine ausreichend hohe Temperatur aufzuheizen.

Wenn ein Plasmagenerator als elektrische Energiequelle in Kombination mit oxidativen Verfahren genutzt wird, ist die Kontamination des Plasmabrenners durch Rauchgase zu vermeiden. Vorteilhaft werden daher die Prozessströme erst durch den Plasmagenerator (vor)geheizt und anschließend durch oxidative Verfahren auf die gewünschte Temperatur gebracht. Alternativ werden der Plasmagenerator und das oxidative Verfahren parallel gefahren.

Wird bei der Durchführung des erfindungsgemäßen Verfahrens eine nicht-elektrische Energiequelle eingesetzt, in der thermische Energie oxidativ erzeugt wird, erfolgt dies bevorzugt durch vollständige oder teilweise Verbrennung eines Brennstoffs wie Wasserstoff, Erdgas oder eines anderen kohlenwasserstoffhaltigen Energieträgers. Die Wärme des hierbei entstehenden heißen Rauchgases wird nachfolgend in direktem Kontakt und/oder über Wärmetauscher auf Edukte, wie beispielsweise auf zu zersetzende Kohlenwasserstoffe und/oder auf einen Wärmeträger übertragen.

Vorzugsweise wird ein oxidierbare Bestandteile wie z. B. Wasserstoff oder Kohlenwasserstoffe enthaltendes Gas, bevorzugt Methan, z. B. unter Verwendung von Erdgas, wobei in Abhängigkeit von der Erdgaslagerstätte der Methananteil im Erdgas typischerweise zwischen 75 und 99mol% liegt, als Prozessstrom eingesetzt, so dass sein Wärmeinhalt vorzugsweise nach der elektrischen Aufheizung durch Oxidation von oxidierbaren Bestandteilen erhöht werden kann. Zweckmäßigerweise wird der Prozessstrom hierzu in einen Brenner eingeleitet und dort mit einem Oxidationsmittel, bei dem es sich um Luft oder um mit Sauerstoff angereicherte Luft oder um reinen Sauerstoff handelt, vermischt. Das Oxidationsmittel wird dabei mengengeregelt zudosiert, wobei die sich stromabwärts des Brenners einstellende Temperatur des Prozessstroms als Regelgröße verwendet wird. Die Temperatur des Prozessstroms kann somit weitgehend unabhängig von der momentan für seine Erwärmung zur Verfügung stehenden elektrischen Leistung auf einen vorgegebenen Wert eingestellt und insbesondere konstant gehalten werden.

Falls mit Hilfe von Strom mit zeitlich schwankender Leistung Wärme in Heizelementen erzeugt wird, kann es vorteilhaft sein, diese Heizelemente in einem heißen gasförmigen Prozessstrom zu positionieren, der in einem Brenner als Rauchgas erzeugt wird.

Handelt es sich bei dem wärmeverbrauchenden Prozess um die Pyrolyse von Kohlenwasserstoffen, werden die Kohlenwasserstoffe vorteilhaft bis zum Erreichen des thermodynamischen Gleichgewichts über ihre Zersetzungstemperaturen erhitzt (d. h. dass die Verweilzeit in der Reaktionszone lang genug ist, um ein Erreichen des thermodynamischen Gleichgewichts sicherzustellen), so dass sie in Wasserstoff und Kohlenstoff zerfallen. Möglich ist es aber auch, die Zeit jenseits der Zersetzungstemperaturen so kurz zu wählen, dass sich das thermodynamische Gleichgewicht nicht einstellt. Auf diese Weise wird ein Produktgasstrom gewonnen, der neben Wasserstoff und Kohlenstoff auch ungesättigte Kohlenwasserstoffverbindungen und Aromaten, sowie nicht-umgesetzte gesättigte Kohlenwasserstoffe wie Methan und/oder Ethan enthält.

In einer alternativen Ausgestaltung der Erfindung werden Prozessströme vorteilhaft innerhalb der Reaktionszone aufgeheizt. Beispielsweise können Widerstandsstäbe und befeuerte Strahlungsrohre in der Reaktionszone angeordnet sein. Die Strahlungsrohre werden bevorzugt mit Rekuperativ- oder Regenerativbrennern kombiniert (J.A. Wünning, J.G. Wünning: Regeneratorbrenner für Strahlheizrohre. Deutscher Flammentag, Berlin, 2007). Vorteilhaft wird über eine Störgrößenaufschaltung die Brennstoffzufuhr zu den Brennern so geregelt, dass bei variierender Leistung der elektrischen Energiequelle der Sollwert der Temperatur in der Reaktionszone eingehalten werden kann. In dieser Konfiguration sind die Prozessströme von den Rauchgasen der oxidativen Verbrennung getrennt. Die Wärme wird indirekt über die Wand des Strahlungsrohrs übertragen. So wird durch die Kombination der elektrischen und der oxidativen Beheizung eine Kontamination der Prozessströme wirksam verhindert.

In einer unter dem Aktenzeichen DE102011106645.8 beim Deutschen Patent- und Markenamt eingereichten Patentanmeldung, deren Inhalt mit ihrer Zitierung zur Gänze in die vorliegende Anmeldung aufgenommen wird, wird ein Verfahren zur Zersetzung von Kohlenwasserstoffen beschrieben, bei dem die zu zersetzenden Kohlenwasserstoffe durch eine in einer Schüttung aus Granulat angeordnete Hochtemperaturzone geführt und dabei thermisch in Wasserstoff und Kohlenstoff zersetzt werden. Das Granulat ist vorteilhaft aus Partikeln gebildet, die aus Metall, Keramik, Kohle und/oder Koks bestehen, bevorzugt aus Kohle und/oder Koks mit einem Kohlenstoffgehalt im Bereich von 50 bis 100Gew.-%. Ausgestaltungen dieses Verfahrens sehen vor, dass für die Zersetzung benötigte Energie über elektrischen Strom und/oder oxidativ bereitgestellt wird. Da diese Art der Kohlenwasserstoffzersetzung besonders geeignet erscheint, um nach dem erfindungsgemäßen Verfahren durchgeführt zu werden, wird vorgeschlagen, Strom in Form von Überschussstrom zuzuführen und dessen zeitliche Leistungsschwankungen dadurch auszugleichen, dass thermische Energie mit zeitlich schwankender Leistung oxidativ erzeugt und für die Kohlenwasserstoffzersetzung derart bereitgestellt wird, dass die für die Zersetzung der Kohlenwasserstoffe insgesamt zur Verfügung stehende Leistung stets einem Sollwert entspricht oder diesem angenähert ist.

Das erfindungsgemäße Verfahren erlaubt es, Hochtemperaturverfahren als negative Minutenreserve bei Frequenzregelungen in elektrischen Netzen einzusetzen. Durch das erfindungsgemäße Verfahren sind diese Hochtemperaturverfahren schnell zuschaltbar und können ferner hohe Energiemengen abnehmen. Kontinuierlich betrieben sind diese Verfahren permanent für die Einspeisung von Überschussstrom, beispielsweise von Nachtstrom, verfügbar.

Hochtemperaturprozesse eignen sich besonders gut für die Nutzung elektrischer Energie, da die Umwandlung elektrischer Energie in Wärme dabei nur einen geringen Exergieverlust verursacht. Durch die Umwandlung in Wärme wird ein Teil der Exergie vernichtet. Dieser Anteil sinkt mit steigendem Temperaturniveau der Wärmesenke, im vorliegenden Fall eines endothermen Hochtemperaturprozesses. Da diese Prozesse weitgehend energieintegriert in Verbundstandorten eingebunden sind, kann aus der inneren Energie der Produktströme der maximale technisch mögliche Anteil wieder in Exergie, beispielsweise in Form von Hochdruckdampf, umgewandelt werden.

Die Erfindung erlaubt es somit, die Hochtemperaturprozesse, z. B. die Zersetzung von Kohlenwasserstoffen, unabhängig von der momentan zur Verfügung stehenden elektrischen Energie stets unter optimalen Betriebsbedingungen durchzuführen. Insbesondere ist es möglich, günstigen Überschussstrom ohne Zwischenspeicherung einzusetzen und so dessen Kostenvorteile ohne wesentliche Einschränkungen zu nutzen. Ferner erlaubt die Erfindung trotz Wechsel zwischen zwei oder mehreren verschiedenen Energiequellen einen stationären Betrieb, bei dem die (Zersetzungs)produkte mit zeitlich konstanter Menge und Zusammensetzung erzeugt werden.

An zwei Beispielen sollen die wirtschaftlichen Vorteile gezeigt werden, die sich durch den Einsatz des erfindungsgemäßen Verfahrens ergeben:

Im Jahr 2010 konnten in Deutschland 127GWh elektrischer Energie aus erneuerbaren Quellen aufgrund von Überkapazitäten nicht produziert werden, ferner betrug die von den vier deutschen Netzbetreibern abgerufene negative Minutenreserve insgesamt ca. 850 GWh. Mit dieser Energie hätten ca. 100.000 t Wasserstoff durch Pyrolyse von Methan produziert werden können (bei einem Wirkungsgrad von ca. 66%). In einem konventionell beheizten Prozess wären für diese Energiemenge unter Annahme von spezifischen Energiekosten von 8 €/GJ ca. 25 Mio. € an Kosten angefallen.

Bei einer Anlage mit einer Wasserstoffproduktionsrate von 20.000 Nm³/h besteht für die thermische Zersetzung des eingesetzten Methans ein Leistungsbedarf von ca. 15 MW. Zurzeit steht an etwa 800 Stunden im Jahr Überschussstrom mit einer gesamten Energiemenge von ca. 12GWh im Wesentlichen kostenlos zur Verfügung. Soll die gleiche Energiemenge durch die Verbrennung von Methan erzeugt werden, würde dies unter der Annahme von 8 €/GJ Kosten in Höhe von ca. 350.000€ verursachen. Es ist zu erwarten, dass das Einsparungspotenzial durch zunehmende Verfügbarkeit von Überschussstrom zukünftig deutlich steigt.

Im Weiteren soll die Erfindung anhand eines in der Figur 1 schematisch dargestellten Ausführungsbeispiels näher erläutert werden.

Die Figur 1 zeigt eine Variante des erfindungsgemäßen Verfahrens, bei dem Methan in einer in einer Schüttung aus kohlenstoffhaltigem Granulat angeordneten Hochtemperaturzone in Wasserstoff und Kohlenstoff zersetzt wird.

Über die Zuführung 1 wird ein kohlenstoffhaltiges Granulat, bei dem es sich beispielsweise um Koksgrus handelt, mit Umgebungstemperatur von oben in den Reaktionsraum R eingeleitet, durch den es nachfolgend unter Wirkung der Schwerkraft in einem Wanderbett W nach unten geführt wird. Ein Methan enthaltendes Gas 2, bei dem es sich beispielsweise um Erdgas handelt, wird gleichzeitig von unten in den Reaktionsraum R geleitet und im Gegenstrom durch das Wanderbett W nach oben geführt. Das Gas 2, das bei seinem Eintritt in den Reaktionsraum R Umgebungstemperatur aufweist, wird auf seinem Weg nach oben in direktem Wärmetausch mit dem Wanderbett W aufgeheizt. In der Hochtemperaturzone H, in der Temperaturen von mehr als 1000°C herrschen, wird Methan in Wasserstoff und Kohlenstoff zersetzt, wobei sich der Kohlenstoff zum überwiegenden Teil an die kohlenstoffhaltigen Körner des Wanderbetts W anlagert. Der gebildete heiße Wasserstoff strömt weiter nach oben, wobei er in direktem Wärmetausch mit dem Wanderbett W abgekühlt wird, so dass über Leitung 3 ein wasserstoffhaltiges Gas mit einer Temperatur abgezogen werden kann, die nicht wesentlich oberhalb der Umgebungstemperatur liegt. In der Trenneinrichtung T wird ein Teil 4 des Wasserstoffs aus dem wasserstoffhaltigen Gas 3 abgetrennt und nachfolgend mit konstantem Mengenstrom in eine Vorrichtung zum elektrischen Energieeintrag, z.B. einen Plasmagenerator P eingeleitet, wo es zu einem Wärmeträger 5 aufgeheizt wird. Der Plasmagenerator P wird mit Überschussstrom 9 betrieben, der mit zeitlich schwankender Leistung zugeführt wird. Abhängig von der momentanen Leistung des Überschussstroms 9 schwankt die Temperatur des Wärmeträgers 5 zwischen einem Minimal- und einem Maximalwert. Um die Temperatur des Wärmeträgers auf einem vorgegebenen Sollwert einzustellen, wird über den Brenner B ein Oxidationsmittel 10, bei dem es sich um Sauerstoff, Luft oder mit Sauerstoff angereicherte Luft handelt, mengengeregelt dem Wärmeträger 5 zudosiert. Als Regelgröße dient hierbei die Temperatur des Wärmeträgers 11 stromabwärts des Brenners B. Der Wärmeträger 11 wird nachfolgend in die Hochtemperaturzone H eingeleitet, wo er die für die Methanzersetzung benötigte Energie bereitstellt. Am unteren Ende des Reaktionsraums R wird mit nahezu Umgebungstemperatur Granulat 6 abgezogen, das aufgrund der Kohlenstoffanlagerungen beispielsweise als Hochofenkoks oder Kokereizuschlagsstoff eingesetzt werden kann. Bestandteile des Granulats 6, die die Qualitätsanforderungen nicht erfüllen, weil sie einen zu großen (< 80 mm) oder zu kleinen Durchmesser (< 35 mm) oder beispielsweise eine zu geringe Festigkeit (Trommelfestigkeit 140 für Hochofenkoks > 40% gemäß ISO/FDIS 18894:2003) aufweisen, werden in der Trenneinrichtung S durch Siebung und/oder Sichtung abgetrennt und nach einer eventuellen Zerkleinerung über Leitung 7 wieder in den Reaktionsraum R zurückgeführt. Bei dem verbleibenden Rest 8 handelt es sich um Hochofenkoks, der als hochwertiges Produkt abgegeben wird.

## Patentansprüche

1. Verfahren zur Durchführung eines wärmeverbrauchenden Prozesses, **dadurch gekennzeichnet, dass** die für den wärmeverbrauchenden Prozess benötigte Gesamtenergie im Jahresmittel aus mindestens zwei verschiedenen Energiequellen stammt, wobei eine der Energiequellen eine elektrische Energiequelle ist, deren Leistung zwischen 0 und 100% der benötigten Gesamtleistung variiert, und thermische Energie aus wenigstens einer weiteren Energiequelle dem wärmeverbrauchenden Prozess derart zugeführt wird, dass die insgesamt zugeführter Leistung stets einem Sollwert entspricht oder diesem angenähert ist.

2. Verfahren nach Anspruch 1, **dadurch gekennzeichnet, dass** die insgesamt zur Verfügung stehende Leistung von dem Sollwert um weniger als 10% abweicht.

3. Verfahren nach einem der Ansprüche 1 oder 2, **dadurch gekennzeichnet, dass** mit Hilfe des elektrischen Stroms ein oder mehrere Prozessströme aufgeheizt werden, dessen Wärme nachfolgend für den wärmeverbrauchenden Prozess genutzt wird.

4. Verfahren nach einem der Ansprüche 1 bis 3, **dadurch gekennzeichnet, dass** während der Übergangszeit, in der eine Änderung der Leistungen einer Energiequelle durchgeführt wird, der dem wärmeverbrauchenden Prozess zugeführte Wärmestrom maximal um 10% schwankt.

5. Verfahren nach einem der Ansprüche 1 bis 4, **dadurch gekennzeichnet, dass** die Übergangszeit kürzer als die geforderte Ansprechzeit der Minutenreserve in elektrischen Netzwerken ist.

6. Verfahren nach einem der Ansprüche 1 bis 5, **dadurch gekennzeichnet, dass** der Energieverbrauch des Hochtemperaturprozesses größer als 0,5 MW/m³ in der Reaktionszone ist.

7. Verfahren nach einem der Ansprüche 1 bis 6, **dadurch gekennzeichnet, dass** sich durch den Wechsel der Energiequellen die Nebenproduktselektivität der Hochtemperaturprozesse maximal um 1 % erhöht.

8. Verfahren nach einem der Ansprüche 1 bis 7, **dadurch gekennzeichnet, dass** in wenigstens einer weiteren Energiequelle thermische Energie oxidativ erzeugt wird.

9. Verfahren nach einem der Ansprüche 3 bis 8, **dadurch gekennzeichnet, dass** die Wärme des elektrisch aufgeheizten Prozessstroms durch Oxidierung von Gasbestandteilen erhöht wird.

10. Verfahren nach Anspruch 9, **dadurch gekennzeichnet, dass** der elektrisch aufgeheizte Prozessstrom in einem Brenner mit einem Oxidationsmittel vermischt wird, bei dem es sich um Luft oder um mit Sauerstoff angereicherte Luft oder um reinen Sauerstoff handelt.

11. Verfahren nach einem der Ansprüche 9 oder 10, **dadurch gekennzeichnet, dass** das Oxidationsmittel dem elektrisch aufgeheizten Prozessstrom mengengeregelt zugeführt wird, wobei die sich einstellende Gastemperatur als Regelgröße dient.

12. Verfahren nach einem der Ansprüche 1 bis 11, **dadurch gekennzeichnet, dass** es sich bei dem wärmeverbrauchenden Prozess um die Pyrolyse von Kohlenwasserstoffen handelt, die in einer Reaktionszone in Gegenwart eines Granulats thermisch zersetzt werden, wobei das aus Metall oder Keramik oder Kohle oder Koks bestehende Granulat als Wanderbett durch die Reaktionszone geführt wird.
